(19) Europäisches Patentamt
European Patent Office
Office européen des brevets

(11) EP 4 763 887 A1

(12) EUROPEAN PATENT APPLICATION

(43) Date of publication:
**24.06.2026 Bulletin 2026/26**

(21) Application number: **24307220.4**

(22) Date of filing: **20.12.2024**

(51) International Patent Classification (IPC):
***C08G 65/40*** *(2006.01)* ***C08L 71/12*** *(2006.01)*

(52) Cooperative Patent Classification (CPC):
(C-Sets available)
**C08L 67/02; C08G 65/4012; C08L 71/12** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ARKEMA FRANCE**
**92800 Puteaux (FR)**

(72) Inventors:
- **ECKEL, Zak**
**KING OF PRUSSIA, PA 19406 (US)**
- **RODRIGUEZ-MARIN, Silvia**
**08470 SANT CELONI (ES)**

(74) Representative: **Arkema Patent**
**Arkema France**
**DRD-DPI**
**51, Esplanade du Général de Gaulle**
**CS 10478**
**92907 Paris La Défense Cedex (FR)**

# (54) USE OF PAEK(S) AS ADDITIVE IN A COATING COMPOSITION AND COATING COMPOSITION THEREOF

(57) The invention concerns a coating composition comprising at least one resin, said at least one resin not being a polyaryletherketone; and, at least one polyaryletherketone; wherein the at least one polyaryletherketone represents from 0,0015% to 15,0% by weight of the total weight of the at least one resin and the at least one polyaryletherketone. The invention also targets specific uses of polyaryletherketone as an additive in a coating composition.

**Figure 1**

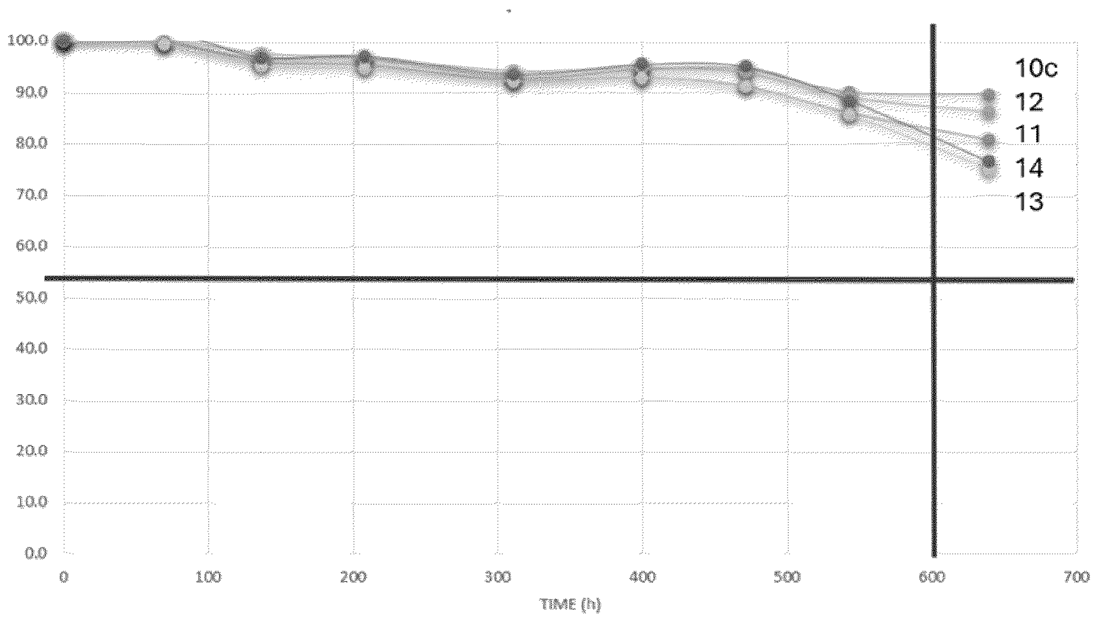


EP 4 763 887 A1

(52) Cooperative Patent Classification (CPC): (Cont.)

C-Sets
**C08L 67/02, C08L 71/00**

## Description

### Technical field

The invention pertains to coating compositions, and disclose notably the use of one or several polyaryletherketones as additive(s) for modifying some properties of coating compositions. Among the targeted properties to be modified, is gloss. More precisely, some applications require lowering the gloss so that the coating gets a matte finish.

### Background of the invention

Many substrates require one or more layers of coating to provide an aesthetic aspect, enhanced surface properties and/or a protection from diverse factors such as corrosion, heat, wear, exposure to solvents, stains, UV's, etc.... Due to increasing concerns in environmental pollution, the coating industry is shifting towards volatile organic compounds (VOC) reduction or elimination.

Powder coatings, which are dry, finely divided, free flowing and solid materials at room temperature, have gained popularity in recent years over liquid coatings. Powder coatings are an environmentally promising technology since they do not contain any VOC and do not require exhaust treatment or wastewater treatment. This is a significant advantage over liquid paints in which organic solvent is volatilized into the atmosphere when the paint is cured by heating. In addition, excess powder coating material can be reclaimed and reused.

Fluorocarbons are known additives in powder coating compositions to improve matte appearance. For example, US201831999 describes a low gloss curable powder coating composition comprising one or more hydroxyl or carboxyl functional polyester(s), one or more hydroxyl or carboxyl functional acrylic, and one or more crosslinker, and PTFE and/or other suitable fluorocarbons like PFA, as matting agent.

Other additives are also known to be matting agents such as barium sulfate, magnesium silicate, silicon dioxide, alumina silicates, alkali alumina silicate ceramic microspheres, alumina silicate glass microspheres or flakes, polyolefin waxes in combination with the salt of an organic anion, polymeric wax additives, as disclosed in WO12059491 for a polyester-based powder.

There is currently a need to find new matting agents to be used for powder coating compositions. These matting agents have to at the very least not deteriorate other desired properties, and may on the contrary improve some of these other desired properties.

Summary of the invention

A first object of the invention is a coating composition comprising:

- at least one resin, said at least one resin not being a polyaryletherketone; and,
- at least one polyaryletherketone;

wherein the at least one polyaryletherketone represents from 0,0015% to 15,0% by weight of the total weight of the at least one resin and the at least one polyaryletherketone.

In some embodiments, the at least one resin is a polyester, and preferably a saturated polyester. The polyester may be the result of the reaction of at least one polyol component with at least one polyacid component. In some embodiments, the at least one polyacid component comprises terephthalic acid, isophthalic acid and combinations thereof. In some embodiments, the at least one polyol component comprises neopentyl glycol, ethylene glycol, diethylene glycol, 1,2- or 1,3-propanediol, 1,2-, 1,3- or 1,4-butanediol, 1,5-pentanediol, 1,6-hexanediol, bisphenol A, hydrogenated bisphenol A, an alkoxylated bisphenol A and combinations thereof.

In some embodiments, the at least one polyaryletherketone is a polyetherketoneketone, a polyetheretherketone, or a mixture thereof. The at least one polyaryletherketone may notably be a polyetherketoneketone consisting essentially of, or consisting of, a terephthalic repeating unit and, an isophthalic repeating unit, the terephthalic repeating unit ("T unit") having the formula:

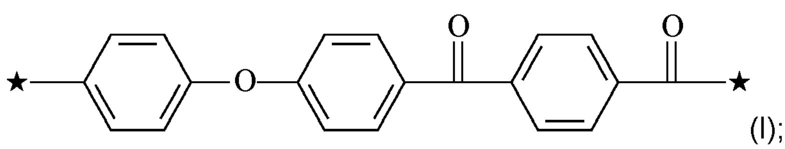
(I);

the isophthalic unit ("I unit") having the formula:

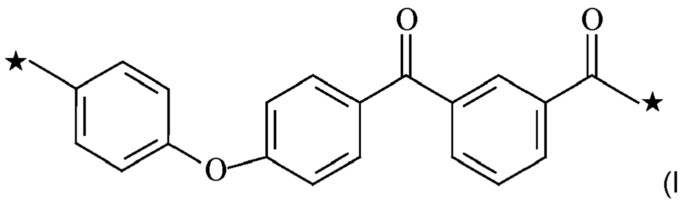

(II)

wherein the weight proportion of T units relative to the sum of the T and I units varies from 0% to 100%, preferably from 50% to 90%, and more preferably from 55% to 85%.

In some advantageous embodiments, the polyetherketoneketone has a weight proportion of T units relative to the sum of the T and I units which varies from 65% to 75% or from 75% to 85%.

In some embodiments, the at least one polyaryletherketone represents 0,01 % or more, preferably 0,1% or more, and most preferably 0,5% or more, by weight of the total weight of the at least one resin and the at least one polyaryletherketone.

In some embodiments, the at least one polyaryletherketone represents 10,0% or less, by weight of the total weight of the at least one resin and the at least one polyaryletherketone.

In some embodiments, the coating composition is in flakes, pellets, or powder form, and preferably the at least one polyaryletherketone are particles within the coating composition having a volume median diameter dv50 of 1 μm to 100 μm, as determined by laser diffraction according to the ISO 13320:2009 standard.

In some embodiments, the coating composition is in flakes, pellets, or powder form, and preferably the at least one polyaryletherketone are particles within the coating composition having a volume median diameter dv50 of 8 μm to 30 μm, as determined by laser diffraction according to the ISO 13320:2009 standard.

In some embodiments, the coating composition of anyone of the preceding claims consists of : the at least one resin; the at least one polyaryletherketone; optionally at least one crosslinking component; optionally at least one catalyst; and optionally one or more other additives than the at least one polyaryletherketone.

A second object of the invention is a process for coating a substrate with the composition as above described, comprising the following steps: applying the coating composition according to the invention on at least part of a surface of a substrate; and curing the coating composition.

A third object of the invention is the use of at least one polyaryletherketone in a coating composition comprising at least one resin, as an additive to lower gloss of the coating composition, said at least one resin not being a polyaryletherketone, and said at least one polyaryletherketone being in a proportion from 0,0015% to 15,0% by weight of the total weight of the at least one resin and the at least one polyaryletherketone.

A fourth object of the invention is the use of at least one polyaryletherketone in a coating composition comprising at least one resin, as an additive to improve the impact resistance, and/or the penetration resistance, and/or the flexibility of the coating composition, said at least one resin not being a polyaryletherketone, and said at least one polyaryletherketone being in a proportion from 0,0015% to 15,0% by weight of the total weight of the at least one resin and the at least one polyaryletherketone.

A fifth object of the invention is the use of at least one polyaryletherketone in a coating composition comprising at least one resin, as an additive to improve the weathering resistance of the coating composition, said at least one resin not being a polyaryletherketone, said at least one polyaryletherketone being in a proportion from 0,0015% to 15,0% by weight of the total weight of the at least one resin and the at least one polyaryletherketone.

## Detailed description of the invention

### List of Figures

Figure 1 represents the gloss 60° retention, expressed as a percentage of initial gloss, in function of time expressed in hours for UV resistance test.

### Resin

The resin is the main component of the coating composition. The resin is not a polyaryletherketone (PAEK).

The resin may be chosen among : polyethylenes, such as low density polyethylene, high density polyethylene, grafted polyethylene with carboxylic acid groups, or ethylene-vinyl acetate copolymer; polyvinyl chlorides; polyesters, as further detailed below; chlorinated polyethers ; epoxydes; polyurethanes; polyamides; and mixtures thereof.

In some preferred embodiments, the resin is a polyester. A polyester is a polymer comprising a plurality of ester bonds. A polyester is generally based on a polyol component, referred to as component a1, and a polyacid component,

referred to as component a2. Accordingly, a polyester comprises moieties derived from the polymerization of a polyol component a1 and a polyacid component a2.

The polyester may be a hydroxyl-functionalized polyester. A hydroxyl-functionalized polyester is a polyester bearing hydroxyl functional groups. In particular the hydroxyl-functionalized polyester may have a hydroxyl number of from 3 to 350 mg KOH/g.

The polyester may be a carboxyl-functionalized polyester. A carboxyl-functionalized polyester is a polyester bearing carboxylic acid functional groups. In particular the carboxyl-functionalized polyester may have an acid number of from 3 to 100 mg KOH/g.

As used herein, a polyol is a compound bearing at least two hydroxyl functional groups. The polyol component a1 comprises or consists of at least one polyol. The polyol component a1 may comprise or consist of a mixture of polyols. Component a1 comprises or consists of a diol component, also referred to as component a11, and optionally a branching polyol component, also referred to as component a12.

As used herein, a diol is a compound bearing at least two hydroxyl functional groups. The hydroxyl functionality of a diol is equal to 2. The diol component a11 comprises or consists of at least one diol. The diol component a11 may comprise or consist of a mixture of diols. In particular, component a11 may comprise or consist of at least one diol selected from the group consisting of an aliphatic diol, a cycloaliphatic diol, an aromatic diol, and combinations thereof.

Examples of suitable aliphatic diols include ethylene glycol, diethylene glycol, 1,2- or 1,3-propanediol, 1,2-, 1,3- or 1,4-butanediol, 1,5-pentanediol, 1,6-hexanediol, 1,10-decanediol, 1,12-dodecanediol, di-, or polyethylene glycol, di-, tri- or polypropylene glycol, neopentyl glycol, 2-butyl-2-ethyl-1,3-propanediol, 2-methyl-1,3-propanediol, 2-methyl-1,2-propanediol, 3-methyl-1,5-pentanediol, and combinations thereof.

Examples of suitable cycloaliphatic diols include 1,1-, 1,2-, 1,3- or 1,4-cyclohexanedimethanol, 1,2-, 1,3- or 1,4-cyclohexanediol, hydrogenated bisphenol A, isosorbide, isoidide, isomannide, and combinations thereof.

Examples of suitable aromatic diols include bisphenol A, an alkoxylated bisphenol A, bisphenol F, an alkoxylated bisphenol F and combinations thereof.

More particularly, component a11 may comprise or consist of at least one diol selected from the group consisting of neopentyl glycol, ethylene glycol, diethylene glycol, 1,2- or 1,3-propanediol, 1,2-, 1,3- or 1,4-butanediol, 1,5-pentanediol, 1,6-hexanediol, bisphenol A, hydrogenated bisphenol A, an alkoxylated bisphenol A and combinations thereof.

As used herein, a branching polyol is a compound bearing at least three hydroxyl functional groups. Accordingly, the hydroxyl functionality of a branching polyol is at least 3. The branching polyol component a12 comprises or consists of at least one branching polyol. The branching polyol component a12 may comprise or consist of a mixture of branching polyols.

In particular, component a12 may comprise at least one branching polyol selected from trimethylolpropane, glycerol, tris(2-hydroxyethyl) isocyanurate, di(trimethylolpropane), pentaerythritol and combinations thereof.

In one embodiment, component a1 is substantially free of component a12.

The polyester is further based on a polyacid component, also referred to as component a2. As used herein, a polyacid is a compound bearing at least two carboxylic acid functional groups or a derivative thereof (i.e. a compound bearing functional groups which can be hydrolyzed to generate at least two carboxylic acid functional groups in situ, such as cyclic anhydrides and mono- or di(C1-C6 alkyl) esters). The polyacid component a2 comprises or consists of at least one polyacid. The polyacid component a2 may comprise or consist of a mixture of polyacids.

Component a2 comprises or consists of a diacid component, also referred to as component a21, and optionally a branching polyacid component, also referred to as component a22.

As used herein, a diacid is a compound bearing exactly two carboxylic acid functional groups or a derivative thereof (i.e. a compound bearing functional groups which can be hydrolyzed to generate two carboxylic acid functional groups in situ, such as cyclic anhydrides and di(C1-C6 alkyl) esters). The acid functionality of a diacid is equal to 2. The diacid component a21 comprises or consists of at least one diacid. The diacid component a21 may comprise or consist of a mixture of diacids.

In particular, component a21 may comprise at least one diacid selected from the group consisting of an aromatic dicarboxylic acid, a saturated or unsaturated aliphatic dicarboxylic acid, a saturated or unsaturated cycloaliphatic dicarboxylic acid, derivatives thereof and combinations thereof.

Examples of suitable aromatic dicarboxylic acids and derivatives thereof include phthalic acid, terephthalic acid, isophthalic acid, bis(4-carboxyphenyl)methane, dimethyl phthalate, dimethyl terephthalate, dimethyl isophthalate, phthalic anhydride and combinations thereof.

Examples of suitable saturated aliphatic dicarboxylic acids and derivatives thereof include as adipic acid, dimethyl adipate, diethyl adipate, sebacic acid, dimethyl sebacate, diethyl sebacate, succinic acid, dimethyl succinate, diethyl succinate, succinic anhydride, 2-methylsuccinic acid, 2-ethylsuccinic acid, 2,2-dimethylsuccinic acid, pimelic acid, suberic acid, azelaic acid, 1,11-undecanedioic acid, 1,12-dodecanedioic acid, oxalic acid, dimethyl oxalate, diethyl oxalate, malonic acid, dimethyl malonate, diethyl malonate, 2-methylmalonic acid, 2-ethylmalonic acid, glutaric acid, dimethyl glutarate, diethyl glutarate, glutaric anhydride, 3,3-dimethylglutaric acid, 3,3-diethylglutaric acid, a C32-C36 fatty

acid dimer and combinations thereof.

Examples of suitable unsaturated aliphatic dicarboxylic acids and derivatives thereof include itaconic acid, citraconic acid, mesaconic acid, glutaconic acid, muconic acid, fumaric acid, maleic acid, maleic anhydride and combinations thereof.

Examples of suitable saturated cycloaliphatic dicarboxylic acids and derivatives thereof include cyclopentane 1,2- or 1,3-dicarboxylic acid, cyclohexane 1,2-, 1,3- or 1,4-dicarboxylic acid, cyclohexane-1,2-dicarboxylic anhydride, cycloheptane 1,2-dicarboxylic acid, 1,2-, 1,3 or 1,4-bis(carboxymethyl)cyclohexane

Examples of suitable unsaturated cycloaliphatic dicarboxylic acids and derivatives thereof include tetrahydrophthalic acid, tetrahydrophthalic anhydride and combinations thereof.

More particularly, component a21 may comprise at least one diacid selected from the group consisting of terephthalic acid, isophthalic acid, adipic acid, derivatives thereof and combinations thereof. Component a21 may comprise at least one diacid selected from the group consisting of terephthalic acid, isophthalic acid and combinations thereof.

In some embodiment, component a21 comprises at least 50%, or at least 60%, or at least 70%, at least 80%, at least 90% or at least 95% by weight of terephthalic acid based on the weight of component a21. In those embodiments, if component a21 comprises a second polyacid, it is preferably isophthalic acid.

In some embodiment, component a21 comprises at least 50%, or at least 60%, or at least 70%, at least 80%, at least 90% or at least 95% by weight of isophthalic acid based on the weight of component a21. In those embodiments, if component a21 comprises a second polyacid, it is preferably terephthalic acid.

A branching polyacid component comprises or consists of at least one branching polyacid. Accordingly, the acid functionality of a branching polyacid is at least 3. The branching polyacid component a22 may comprise or consist of at least one branching polyacid. The branching polyacid component a22 may comprise or consist of a mixture of branching polyacids.

In one embodiment, component a2 is substantially free of component a22.

## PAEK

A polyaryletherketone (PAEK) comprises units of the following formulae:

$$(\text{-Ar-X-}) \text{ and } (\text{-Ar}_1\text{-Y-}),$$

wherein:

- Ar and $Ar_1$ each denote a divalent aromatic radical;
- Ar and $Ar_1$ can preferably be chosen from 1,3-phenylene, 1,4-phenylene, 1,1'-biphenylene divalent in positions 3,3', 1,1'-biphenyl divalent in positions 3,4', 1,4-naphthylene, 1,5-naphthylene and 2,6-naphthylene;
- X denotes an electron-withdrawing group; it can preferably be chosen from the carbonyl group and the sulfonyl group;
- Y denotes a group chosen from an oxygen atom, a sulfur atom or an alkylene group, such as $-(CH)_2-$ and isopropylidene.

In these X and Y units, at least 50%, preferably at least 70% and more particularly at least 80% of the X groups are a carbonyl group, and at least 50%, preferably at least 70% and more particularly at least 80% of the Y groups represent an oxygen atom.

According to a preferred embodiment, 100% of the X groups denote a carbonyl group and 100% of the Y groups represent an oxygen atom.

Advantageously, the PAEK(s) may be chosen from:

- a polyetherketoneketone, also known as PEKK; a PEKK comprises one or more units of formula: -Ph-O-Ph-C(O)-Ph-C(O)-;
- a polyetheretherketone, also known as PEEK; a PEEK comprises one or more units of formula: -Ph-O-Ph-O-Ph-C(O)-;
- a polyetherketone, also known as PEK; a PEK comprises one or more units of formula: -Ph-O-Ph-C(O)-;
- a polyetheretherketoneketone, also known as PEEKK; a PEEKK comprises one or more units of formula: -Ph-O-Ph-O-Ph-C(O)-Ph-C(O)-;
- a polyetheretheretherketone, also known as PEEEK; a PEEEK comprises one or more units of formula: -Ph-O-Ph-O-Ph-O- Ph-C(O)-;
- a polyetherdiphenyletherketone, also known as PEDEK; a PEDEK comprises one or more units of formula -Ph-O-Ph-Ph-O-Ph-C(O)-;

- mixtures thereof; and
- copolymers comprising at least two of the abovementioned units,

wherein: Ph represents a phenylene group and -C(O)- represents a carbonyl group, it being possible for each of the phenylenes independently to be of ortho (1,2), meta (1,3) or para (1,4) type, preferentially being of meta or para type.

In addition, defects, end groups and/or monomers can be incorporated in a very small amount in the polymers as described in the above list, without, however, having an effect on their performance.

Preferentially, in the embodiments in which the polyaryletherketone is a copolymer, the latter has a homogeneous structure, in particular of statistical type.

According to certain embodiments, the PAEK is a polyetherketoneketone. Advantageously, the polyetherketoneketone consists essentially of, and preferentially consists of: a terephthalic repeating unit and, an isophthalic repeating unit, the terephthalic repeating unit ("T unit") having the formula:

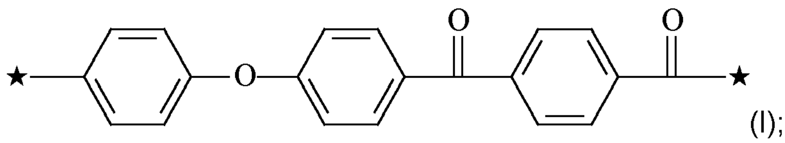

(I);

the isophthalic unit ("I unit") having the formula:

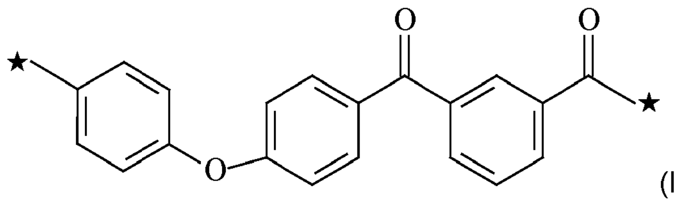

(II).

The weight proportion of T units relative to the sum of the T and I units may vary from 0% to 100%. The weight proportion of T units, relative to the sum of the T and I units, may in particular be from 0% to 5%; or from 5% to 10%; or from 10% to 15%; or from 15% to 20%; or from 15% to 20%; or from 20% to 25%; or from 25% to 30%; or from 30% to 35%; or from 35% to 40%; or from 40% to 45%; or from 45% to 50%; or from 50% to 55%; or from 55% to 60%; or from 60% to 65%; or from 65% to 70%; or from 70% to 75%; or from 75% to 80%; or from 80% to 85%, or from 85% to 90%, or from 90% to 95%, or from 95% to 100%. The choice of the molar proportion of T units, relative to the sum of the T and I units, is one of the factors which makes it possible to adjust the rate of crystallization properties of the polyetherketoneketones. A given molar proportion of T units, relative to the sum of the T and I units, can be obtained by adjusting the respective concentrations of the reactants during the polymerization, in a manner known per se.

In some preferred embodiments, the polyetherketoneketone consists essentially of, and preferentially consists of, repeat units (I) and (II), wherein the weight proportion of T units relative to the sum of the T and I units varies from 50% to 90%.

In some specific embodiments, the polyetherketoneketone consists essentially of, and preferentially consists of, repeat units (I) and (II), wherein the weight proportion of T units relative to the sum of the T and I units varies from 55% to 65%.

In some specific embodiments, the polyetherketoneketone consists essentially of, and preferentially consists of, repeat units (I) and (II), wherein the weight proportion of T units relative to the sum of the T and I units varies from 65% to 75%.

In some specific embodiments, the polyetherketoneketone consists essentially of, and preferentially consists of, repeat units (I) and (II), wherein the weight proportion of T units relative to the sum of the T and I units varies from 75% to 85%.

Such polyetherketoneketones are commercially available under the name Kepstan® from Arkema.

According to certain embodiments, the PAEK may be a polyetheretherketone.

According to some embodiments, the polyetheretherketone may be an homopolymer consisting essentially of, or even consisting of, a repeating unit having the formula:

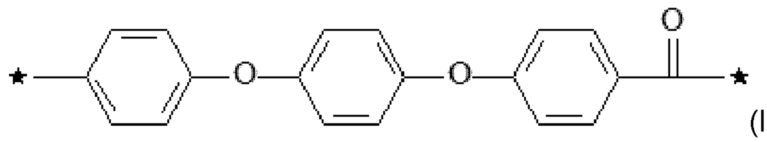

(III).

Such polyaryletherketones are commercially available under the name KetaSpire® from Solvay, under the name VestaKeep® from Evonik and PEEK Victrex® from Victrex.

According to some embodiments, the polyetheretherketone may be a copolymer consisting essentially of, or even consisting of, a repeating unit having the formula (III) and a repeating unit having the formula:

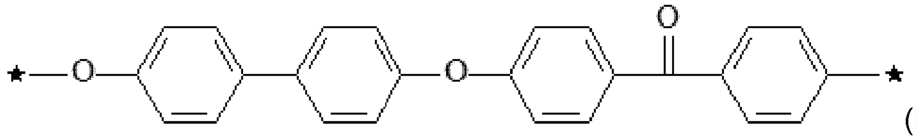

(IV).

The molar proportion of (III) units relative to the sum of the (III) and (IV) units may range from 0% to 99%, preferentially from 0% to 95%.

According to some embodiments, the polyetheretherketone may be a copolymer consisting essentially of, or even consisting of, a repeating unit having the formula (III) and a repeating unit having the formula:

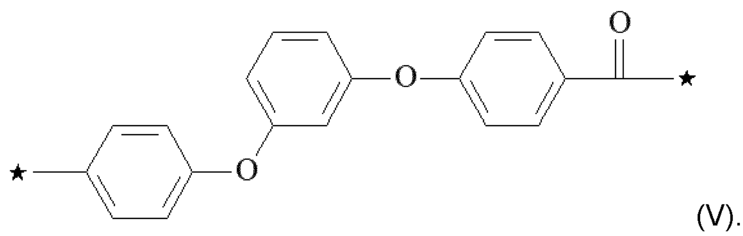

(V).

The molar proportion of (III) units relative to the sum of the (III) and (V) units may range from 0% to 99%, and preferentially from 0% to 95%.

Advantageously, the PAEK has a viscosity number of 0,5 to 2,0 dl/g, preferably of 0,6 to 1,6 dl/g, and most preferably of 0,7 to 1,4 dl/g, at 25°C in an aqueous solution of sulfuric acid at 96%wt as measured according to ISO 307:2019 applied to PAEK.

According to certain embodiments, the composition comprises a single type of PAEK.

## Composition

The composition comprises at least one resin and at least one polyaryletherketone. The at least one polyaryletherketone represents from 0,0015% to 15,0% by weight of the total weight of the at least one resin and the at least one polyaryletherketone. In some embodiments, the composition comprises several polyaryletherketones. In those embodiments, it is the total weight of the several polyaryletherketones that is considered when mentioning the proportion of the at least one polyaryletherketone by weight of the total weight of the at least one resin and the at least one polyaryletherketone.

The at least one polyaryletherketone represents preferably 0,01% or more, more preferably 0,1 % or more, and most preferably 0,5% or more, by weight of the total weight of the at least one resin and the at least one polyaryletherketone. The at least one polyaryletherketone may represent 1,0% or more, or 1,5% or more, or 2,0% or more, or 2,5% or more, by weight of the total weight of the at least one resin and the at least one polyaryletherketone.

The at least one polyaryletherketone may represent 14,0% or less, or 13,0% or less, or 12,5% or less, or 12,0% or less, or 11,5% or less, or 11,0% or less, or 10,5% or less, or 10,0% or less, or 9,5% or less, or 9,0% or less, or 8,5% or less, or 8,0% or less by weight of the total weight of the at least one resin and the at least one polyaryletherketone. In some embodiments, the at least one polyaryletherketone may represent 10% or less, by weight of the total weight of the at least one resin and the at least one polyaryletherketone. In some embodiments, the at least one polyaryletherketone may represent from 0,01% to 12,5%, by weight of the total weight of the at least one resin and the at least one polyaryletherketone.

In some embodiments, the at least one polyaryletherketone may represent from 0,5% to 10,0%, by weight of the total weight of the at least one resin and the at least one polyaryletherketone.

In some embodiments, the at least one polyaryletherketone may represent from 2,5% to 8,5%, by weight of the

total weight of the at least one resin and the at least one polyaryletherketone.

The composition may also comprise : - optionally a crosslinking component;

- optionally a catalyst; and
- optionally one or more other additives than the at least one polyaryletherketone.

In some embodiments, the composition may consist of : - the at least one resin;

- the at least one polyaryletherketone;
- optionally at least one crosslinking component;
- optionally at least one catalyst; and
- optionally one or more other additives than the at least one polyaryletherketone.

Said one or more additives may be selected from pigments and dyes, flow agents and levelling agents, degassing agents, UV absorbers, antioxidants and stabilizers, electrostatic additives, waxes and combinations thereof.

Examples of suitable pigments and dyes include metallic oxides (e.g. titanium dioxide, iron oxide or zinc oxide), metal hydroxides, metal powders, sulphides, sulphates, carbonates, silicates (e.g. ammonium silicate), carbon black, talc, china clay, barytes, iron blues, lead blues, organic reds and organic maroons.

Flow and levelling agents may be used to improve the melt-flow properties of the composition and reduce surface defects in the final coating. Examples of suitable flow agents and levelling agents include (meth)acrylic polymers and fluorine polymers such as BYK-360 P, BYK-361 and BYK-300 (Byk Chemie), Resiflow® PV5, Resiflow® PV88, Resiflow® P-67, and Resiflow® P-200 (Worlee), Modaflow® (Allnex) and Acronal® 4F (BASF).

A degassing agent may be used to remove the gas and/or water entrapped in the composition and reduce surface defects in the final coating. An example of a suitable degassing agent is benzoin.

Examples of suitable UV absorbers, antioxidants and stabilizers include benzotriazoles such Tinuvin® 900 (Ciba), UV-234 PD and UV-928 PD (MPI Chemie), hindered amine light stabilizers such as Tinuvin® 144 (Ciba), LS-119 and LS-4050 (MPI Chemie), other stabilizing agents such as Tinuvin® 312 and 1130 (Ciba), antioxidants such as Irganox® 1010 (Ciba) and phosphonite or phosphite stabilizers.

An electrostatic additive may be as defined above for the polyester composition.

Examples of suitable waxes include polyethylene wax, polypropylene wax and polyamide wax.

The total amount of additives, including the at least one polyaryletherketone, in the coating composition of the invention may be up to 25% by weight based on weight of the coating composition.

Polyester-based coating compositions typically rely on a crosslinking component to achieve the desired film properties, such as durability, chemical resistance, and adhesion. In addition, a catalyst is often used in order to accelerate the curing process and improve the final properties of the coating. The following paragraphs detail in particular such crosslinking components and catalysts particularly adapted to polyesters. The person skilled in the art would know how to select the proper crosslinking components and/or catalyst for other resins.

In some embodiments, notably when the resin is a polyester, the composition may also comprise : - a crosslinking component;

- optionally a catalyst; and
- optionally one or more other additives than the at least one PAEK.

In some embodiments, notably when the resin is a polyester, the composition may consist of the at least one resin;

- the at least one polyaryletherketone;
- at least one crosslinking component;
- optionally at least one catalyst; and
- optionally one or more other additives than the at least one polyaryletherketone.

A crosslinking component comprises or consists of at least one crosslinking compound. A crosslinking component may comprise or consist of a mixture of crosslinking compounds. A crosslinking compound is a compound bearing at least two functional groups which are reactive towards the functional groups present in the polyester composition, in particular towards the carboxylic acid functional groups present in the polyester composition. For example, a crosslinking compound may bear at least two functional groups selected from epoxide or hydroxyl, preferably at least two epoxide functional groups.

In one embodiment, the crosslinking component comprises at least one epoxy resin. An epoxy resin may be defined as a compound bearing at least two epoxide functional groups.

The epoxy resin may have an epoxide equivalent weight (EEW) from 400 to 1000 g/eq, in particular from 500 to 900 g/eq, more particularly from 600 to 850 g/eq, even more particularly from 700 to 800 g/eq.

The epoxy resin may be solid at 25°C. The epoxy resin may have a low melt viscosity to facilitate its extrusion in admixture with other components of the coating composition, preferably at temperatures below 200°C. For example, the epoxy resin may have a melt viscosity from 0.6 to 6 Pa·s at 150°C and preferably from 2 to 5 Pa·s at 150°C.

The epoxy resin may be selected from a glycidyl ether resin or triglycidylisocyanurate, in particular a glycidyl ether resin based on bisphenol A or bisphenol F.

Preferred epoxy resins for the purposes of this invention are bisphenol A epoxy resins, such as those sold under the trademarks ARALDITE® GT-7004, GT-7071, GT-7072 or GT-6259 (Huntsman LLC) or EPON® 1001 and 2042 (Shell Chemicals, Inc.).

The mixing ratio of the polyester composition and the epoxy resin is generally chosen such that the ratio of carboxyl functional groups of the polyester composition to epoxide functional groups of the epoxy resin is from 0.9:1.1 to 1.1:0.9.

In another embodiment, the crosslinking component comprises a β-hydroxyalkylamide. The β-hydroxyalkylamide may have at least two hydroxyl groups. The β-hydroxyalkylamide may be according to the following formula (I):

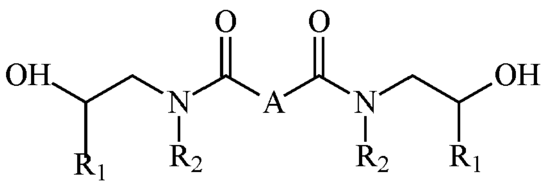

(I)

wherein:

A is an organic group derived from a saturated, unsaturated or aromatic hydrocarbon group having from 1 to 24 carbon atoms, preferably A is a C2-C12 alkylene; each R1 is independently hydrogen or a C1-C5 alkyl, preferably each R1 is independently hydrogen or methyl; each R2 is independently hydrogen, a C1-C5 alkyl or -CH2-CH(R1)-OH, preferably each R2 is -CH2-CH(R1)-OH.

Examples of suitable β-hydroxyalkylamides include N,N,N',N'-tetrakis(2-hydroxyethyl)adipamide (Primid XL552 from EMS) and N,N,N',N'-tetrakis(2-hydroxypropyl)adipamide (Primid QM1260 from EMS).

The mixing ratio of the polyester composition and the β-hydroxyalkylamide is generally chosen such that the ratio of carboxyl functional groups of the polyester composition to hydroxyl functional groups of the β-hydroxyalkylamide is from 0.9:1.1 to 1.1:0.9.

The total amount of crosslinking component in the coating composition of the invention may be from 3 to 50%, based on weight of the coating composition. When the crosslinking component is an epoxy resin, the total amount of crosslinking component may be from 20 to 50% by weight, based on weight of the coating composition. When the crosslinking component is a β-hydroxyalkylamide, the total amount of crosslinking component may be from 3 to 15% by weight, based on weight of the coating composition.

The coating composition of the invention may optionally comprise a catalyst.

A catalyst is preferably present when the crosslinking component comprises an epoxy resin. A catalyst may not be required when the crosslinking component comprises a β-hydroxyalkylamide.

The catalyst may be selected from the group consisting of quaternary ammonium salts (e.g. tetrabutylammonium bromide or tetrapropylammonium chloride), quaternary phosphonium salts (e.g. ethyltriphenylphosphonium bromide or tetrapropylphosphonium chloride), tertiary amines (e.g. 2-phenylimidazoline), tertiary phosphines (e.g. triphenylphosphine) and mixtures thereof.

The degree and the rate of crosslinking may depend in part on the amount of catalyst. The amount of catalyst should not be too high to allow sufficient time for flow and film formation and it should not be too low because that would result in low crosslinking density and poorer mechanical properties. The catalytic activity is best reflected by the resulting gel time. Gel time corresponds to the time after start of crosslinking reaction which the viscosity rises such that the material ceases to be free flowing.

In general, good balance of properties can be achieved with gel times between 100 and 800 sec at the curing temperature of 130-140°C. The amount of catalyst is preferably chosen to obtain a gel time of 200-800 seconds, preferably 250-600 seconds, more preferably 300-500 seconds and more preferably 380 to 420 seconds, at a curing temperature of 140°C, on a composition having a ratio R of 0.95 wherein R is defined as the ratio of moles of carboxylic acid groups in polyester composition to moles of epoxide functional groups in the epoxy resin.

When present, the total amount of catalyst in the coating composition of the invention may be from 0.1 to 10%, preferably from 0.5 to 5%, more preferably from 1 to 3%, by weight based on weight of the coating composition.

The coating composition may be a powder coating composition. As used herein, the term "powder coating composition" means a composition that is in *free-flowing particulate form* at a temperature of 25°C. In particular, the coating composition may be in the form of flakes, of pellets or in the form of a powder which preferably has a volume median diameter Dv50 of from 10 to 250 μm, more preferably from 30 to 150 μm, as determined by laser diffraction according to the ISO 13320:2009 standard.

The coating composition of the invention may be prepared by blending the all the ingredients of the coating composition in the melted resin (melt-blending step). The melt-blending step may be carried out in an extruder. The melt-blending step should be carried out under conditions to avoid premature curing of the coating composition (i.e. by carrying out the melt-blending step at a temperature that is lower than the curing temperature of the coating composition and/or by limiting the duration of the melt-blending step). The melt-blending step may be carried out at a temperature of from 80°C to 130°C, which is high enough to melt the at least one resin but too low to melt the at least one polyaryletherketone. The melt-blending step may be carried out for less than 5 minutes.

Prior to the melt-blending step, the process may comprise an optional step of pre-blending the ingredients of the coating composition. The pre-blending step may be carried out in a mixer, in particular a high shear mixer or a high-intensity dry mixer. The pre-blending step may be carried out at a temperature of 20 to 25°C. After the melt-blending step, the resulting mixture may be cooled to a temperature of 20 to 25°C and subsequently transformed into flakes, pellets or a powder. The coating composition can subsequently be applied on at least part of a surface of a substrate and cured so as to form a coated substrate as detailed below.

The at least one polyaryletherketone used to prepare the coating composition may be in the form of a powder which preferably has a volume median diameter dv50 of from 1 μm to 100 μm, as determined by laser diffraction according to the ISO 13320:2009 standard. The volume median diameter dv50 is preferably of 75 μm or less, more preferably of 50 μm or less, even more preferably of 40 μm or less, and most preferably of 30 μm or less. The median diameter dv50 which may be of 5 μm or more, or of 8 μm or more, or of 10 μm or more. In some embodiments, the at least one PAEK used to prepare the coating composition may be of 5 μm to 50 μm. In some embodiments, the median diameter dv50 of the at least one PAEK used to prepare the coating composition may be of 5 μm to 50 μm, and notably of 8 μm to 30 μm.

In preferred embodiments, the ratio dv50/ Dv50 is of 0,9 or less, preferably of 0,75 or less, preferably of 0,6 or less, and most preferably of 0,5 or less. The ratio dv50/ Dv50 may be of 0,4 or less, or of 0,35 or less, or of 0,30 or less, or of 0,25 or less, or of 0,20 or less, or of 0,15 or less.

The coating composition of the invention may be used to obtain a coating on a substrate. The invention also concerns a process for coating a substrate with the composition of the present invention may comprise the following steps:

- applying the coating composition according to the invention on at least part of a surface of a substrate; and
- curing the coating composition.

The application step may be conducted by electrostatic spraying or by the use of a fluidized bed. Electrostatic spraying is preferred. The coating composition can be applied in one pass or in several passes to provide a film thickness after cure of 10 to 120 μm. The substrate can optionally be preheated prior to application of the coating composition. The preheating step may promote a more uniform deposition of the coating composition on the substrate.

The substrate may be any type of substrate, such as a cellulosic substrate (e.g. hardwood, a particleboard or a fiberboard), a plastic substrate or a metallic substrate.

The curing may be carried out by heating the coating composition at a temperature of from 120 to 200°C, in particular from 125 to 195°C, more particularly from 130 to 190°C, even more particularly from 135 to 185°C, more particularly still from 140 to 180°C. The heating may be carried out for a period of 1 to 60 minutes, preferably 5 to 40 minutes.

The present invention is further illustrated by, but not limited to, the following examples.

## Examples

### Materials

PEKK KEPSTAN (sold by Arkema): Four different powders have been used

Powder 1: PEKK with a T/I ratio of 60:20 (melting point 305°C) and particle distribution with a volume median diameter dv50 of 20 μm.

Powder 2 : PEKK with a T/I ratio of 80:20 (melting point 358°C) and particle distribution with a volume median diameter dv50 of 20 μm.

Powder 3 : PEKK with a T/I ratio of 60:20 (melting point 305°C) and particle distribution with a volume median diameter dv50 of 50 μm.

Powder 4 : PEKK with a T/I ratio of 80:20 (melting point 358°C) and particle distribution with a volume median diameter dv50 of 50 μm.

REAFREE 8585-T (sold by Arkema) : Polyester powder coating resin ;
REAFREE 5709 (sold by Arkema) : Polyester powder coating resin ;
PRIMID XL 552 (sold by EMS-Griltech) : β-hydroxyalkyle amide crosslinker;
Benzoin : Degassing agent;
RESIFLOW PV-88 (sold by Estron chemical) : Flow agent;
KRONOS 2160 (sold by Kronos) : $TiO_2$ white pigment;
BLANC FIXE MICRO (sold by Azelis) : barium sulfate filler.

**Production of base powder coating compositions and dry films thereof**

For each base powder coating formulation, all the ingredients were first blended, and extruded in an extruder at temperatures from 80°C to120°C (ZSK 26 extruder, commercialised by Coperion), grounded at room temprature (RETSCH ZM200, commercialised by Retsch), at sieved to a Dv50 of 65 microns.

The formulation of the different compsotions is gathered in Table1, Table 2 and Table 3 below.

Table 1

| **Base powder coating composition** | **#1c** | **#2** | **#3** | **#4** | **#5** |
|---|---|---|---|---|---|
| REAFREE 8585-T (‰ wt) | 618 | 618 | 618 | 618 | 618 |
| KEPSTAN powder 1 (‰ wt) | 0 | 5 | 50 | 0 | 0 |
| KEPSTAN powder 2 (‰ wt) | 0 | 0 | 0 | 5 | 50 |
| PRIMID XL-552 (‰ wt) | 32 | 32 | 32 | 32 | 32 |
| BENZOIN (‰ wt) | 5 | 5 | 5 | 5 | 5 |
| RESIFLOW PV-88 (‰ wt) | 15 | 15 | 15 | 15 | 15 |
| TiO2 KRONOS 2160 (‰ wt) | 250 | 250 | 250 | 250 | 250 |
| BLANC FIXE MICRO (‰ wt) | 80 | 75 | 30 | 75 | 30 |
| TOTAL | 1000 | 1000 | 1000 | 1000 | 1000 |

Table 2

| **Base powder coating composition** | **#6** | **#7** | **#8** | **#9** |
|---|---|---|---|---|
| REAFREE 8585-T (‰ wt) | 618 | 618 | 618 | 618 |
| KEPSTAN powder 3 (‰ wt) | 5 | 50 | 0 | 0 |
| KEPSTAN powder 4 (‰ wt) | 0 | 0 | 5 | 50 |
| PRIMID XL-552 (‰ wt) | 32 | 32 | 32 | 32 |
| BENZOIN (‰ wt) | 5 | 5 | 5 | 5 |
| RESIFLOW PV-88 (‰ wt) | 15 | 15 | 15 | 15 |
| TiO2 KRONOS 2160 (‰ wt) | 250 | 250 | 250 | 250 |
| BLANC FIXE MICRO (‰ wt) | 75 | 30 | 75 | 30 |
| TOTAL | 1000 | 1000 | 1000 | 1000 |

Table 3

| **Base powder coating composition** | **#10c** | **#11** | **#12** | **#13** | **#14** |
|---|---|---|---|---|---|
| REAFREE 5709 (‰ wt) | 618 | 618 | 618 | 618 | 618 |
| KEPSTAN powder 1 | 0 | 5 | 50 | 0 | 0 |
| (‰ wt) | | | | | |

(continued)

| Base powder coating composition | #10c | #11 | #12 | #13 | #14 |
|---|---|---|---|---|---|
| KEPSTAN powder 2 (‰ wt) | 0 | 0 | 0 | 5 | 50 |
| PRIMID XL-552 (‰ wt) | 32 | 32 | 32 | 32 | 32 |
| BENZOIN (‰ wt) | 5 | 5 | 5 | 5 | 5 |
| RESIFLOW PV-88 (‰ wt) | 15 | 15 | 15 | 15 | 15 |
| TiO2 KRONOS 2160 (‰ wt) | 250 | 250 | 250 | 250 | 250 |
| BLANC FIXE MICRO (‰ wt) | 80 | 75 | 30 | 75 | 30 |
| TOTAL | 1000 | 1000 | 1000 | 1000 | 1000 |

The compositions were electrostatic spray coated on steel (general-purpose sheet metal, 0,81 mm thick) and aluminum (alloy 3003 H14, 0.64 mm thick) substrates and cured at a 180°C for 15min. Coatings having a thickness of approximatively 90 microns were obtained. Coating properties were then evaluated.

**Test methods**

Gloss 60 °of dry films

The method for measuring the gloss on a dry powder coating film over metal surfaces is run using a glossmeter according to ASTM D523 (1994). This test method covers the measurement of the specular gloss for glossmeter geometries of 60°.

Each specimen is placed under or on the glossmeter. In case brush marks or similar texture effects are present, ensure that the directions of the marks are parallel to the axes of the incident and reflected lights of the device. A minimum of 3 measurements are needed in an area of 75x150 mm. If the margin is greater than two units, an additional measurement is taken and the average afterwards is calculated to discard divergent values.

Resistance to boiling water: Qualicoat testing - E increment (aluminum substrates)

Coated aluminum substrates were placed in a pressure cocker filled and boiled in water under pressure for one hour according to Qualicoat test.

The color difference, E_increment was assessed by measuring L*, a* and b* in CIELAB color space before (L1*; a1*; b1*) and after (L2*; a2*; b2*) the pressure cocker treatment. E_increment is defined by the formula:

$$E_{increment} = \sqrt{((L_2^* - L_1^*)^2 + (a_2^* - a_1^*)^2 + (b_2^* - L_1^*)^2)}.$$

Weathering (aluminum substrate)

Artificial weathering of coatings using fluorescent UV lamps - UVB-313 radiation lamp used - and condensation or water spray is carried out in order to produce a certain radiant exposure or mutually agreed total number of operation hours - Cycle 1 (102 min dry/18 min wet) used - and a given degree of a change in a property or properties. The properties of the exposed coatings are compared with those of unexposed coatings, prepared from the same coating materials under identical conditions are measured using: Gloss variation: ISO 2813 - angle of incidence 60°.

impact Resistance (steel substrate)

The impact test was carried out in accordance with ISO 6272-2/ASTM D2794 (indenter diameter: 15,9 mm. The test was performed at room temperature.

The test plate can be either placed in the test apparatus so that the striker remains pointing to the surface where the paint is applied (direct impact), either placed in the test apparatus so that the striker remains pointing to the opposite face where the paint is applied (reverse impact). The essays are carried out by dropping the impact piece at the maximum height, if the film breaks, continue in half and go down successively to reach the maximum height without breaking the film.

Flexibility (conical mandrel)- steel substrate

Flexibility of a coating was tested in accordance with ASTM D522 - 93a (2008) Standard Test. Methods for Mandrel Bend Test of Attached Organic Coatings using a Sheen Conical mandrel bend tester. The test panel is clamped onto a varying-radius mandrel and force applied to bend the coated panel. The test panel is then visually examined for evidence of cracking along the deformed surface. The percentage corresponds the proportion of the deformed surface which shows evidence of cracking.

Penetration test - steel substrate

The method described to carry out the indentation test on a dry film of powder paint, using an embossing device according to INTA 16.02.63.A-1976.

Panels of at least 7x7 cm. are prepared. The test is carried out at 20°C, in a controlled humidity and the panels will remain in these conditions a minimum of 16 h. once dried and before starting the essay.

The panel is firmly hold between the matrix and the clamp on the device, in such a way that the ball rests on the unpainted part. The measurement scale is set to zero. The ball must advance at a constant speed of 0.2 mm/sec until it is observed a breaking, cracking or peeling of the film or until the depth of drawing corresponds to that specified in the sample. The indentation depth is read with an accuracy of 0.1 mm.

## Results

The results for the gloss 60° are gathered in Table 4.

Table 4

| Composition | Steel | Aluminum |
|---|---|---|
| 1c | 96,2 | 96,3 |
| 2 | 95,2 | 95,7 |
| 3 | 79,4 | 80,3 |
| 4 | 94,3 | 94,6 |
| 5 | 77,9 | 78,8 |
| 6 | 93,7 | 94,1 |
| 7 | 71,2 | 74,2 |
| 8 | 93,4 | 93,8 |
| 9 | 31,8 | 33,9 |
| 10c | 99,4 | 99,5 |
| 11 | 97,9 | 98,2 |
| 12 | 81,8 | 83 |
| 13 | 95,6 | 95,6 |
| 14 | 79,6 | 81,1 |

By comparing coatings made of compositions 2-9 to the coating made of comparative composition 1c, and coatings made of compositions 11-14 to the coating made of comparative composition 10c, it can be seen that the addition of PEKK in the coating composition enables to lower the gloss.

The results of table 4 show that a higher amount of additive generally produce a lower gloss 60°.

The results of table 4 also show that PEKK with a T:I ratio of 80:20 seems more effective in lowering the gloss than PEKK with a T:I ratio of 60:40.

The results for resistance to boiling water (E_increment) are gathered in Table 5.

Table5

| Composition | E_increment |
|---|---|
| 1c | 0,33 |
| 2 | 0,25 |
| 3 | 0,17 |
| 4 | 0,23 |
| 5 | 0,20 |
| 6 | 0,19 |
| 7 | 0,18 |
| 8 | 0,22 |
| 9 | 0,30 |
| 10c | 0,71 |
| 11 | 0,52 |
| 12 | 0,31 |
| 13 | 0,28 |
| 14 | 0,13 |

By comparing the coatings made of compositions 2-9 to the coating made of comparative composition 1c, and the coatings made of compositions 11-14 to the coating made of comparative composition 10c, it can be seen that the addition of PEKK in the coating composition enables to improve resistance to the boiling water test.

The other tests were only carried out on the coating made of comparative composition 10c and coatings made of compositions 11-13. The results are gathered in Table 6.

Table 6

| **Composition** | **Impact D/R 15,9 mm ball (cm.Kg)** | **Eichsen Slow penetration (mm)** | **Conical mandrel (%)** |
|---|---|---|---|
| 10c | 45/0 | 3,2 | 10% |
| 11 | 50/0 | 3,6 | 25% |
| 12 | 85/0 | 5,9 | 30% |
| 13 | 70/0 | 4,4 | 20% |

The results of Table 6 show that a higher proportion of additive generally helps to improve impact resistance, penetration resistance and flexibility.

Accelerated weathering resistance tests are provided in Figure 1. It is shown that the addition of PEKK as an additive has a minor detrimental effect on the weathering resistance, contrary to other usually used additives, for examples waxes, which have a significant detrimental effect on weathering resistance.

## Claims

**1.** A coating composition comprising :

- at least one resin, said at least one resin not being a polyaryletherketone; and,
- at least one polyaryletherketone;

wherein the at least one polyaryletherketone represents from 0,0015% to 15,0% by weight of the total weight of the at least one resin and the at least one polyaryletherketone.

**2.** The coating of any one of claim 1 and claim 2, wherein the at least one resin is a polyester, and preferably a saturated polyester.

3. The coating composition of claim 2, wherein the polyester is the result of the reaction of at least one polyol component with at least one polyacid component, wherein said at least one polyacid component comprises terephthalic acid, isophthalic acid and combinations thereof.

4. The coating composition of claim 2 or claim 3, wherein the polyester is the result of the reaction of at least one polyol component with at least one polyacid component, wherein said at least one polyol component comprises neopentyl glycol, ethylene glycol, diethylene glycol, 1,2- or 1,3-propanediol, 1,2-, 1,3- or 1,4-butanediol, 1,5-pentanediol, 1,6-hexanediol, bisphenol A, hydrogenated bisphenol A, an alkoxylated bisphenol A and combinations thereof.

5. The coating composition of any one of the preceding claims, wherein the at least one polyaryletherketone is a polyetherketoneketone, a polyetheretherketone, or a mixture thereof.

6. The coating composition of any one of the preceding claims, wherein the at least one polyaryletherketone is a polyetherketoneketone consists essentially of, or consists of, a terephthalic repeating unit and, an isophthalic repeating unit, the terephthalic repeating unit ("T unit") having the formula:

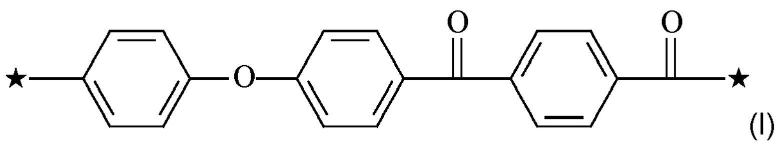

(I) ;

the isophthalic unit ("I unit") having the formula:

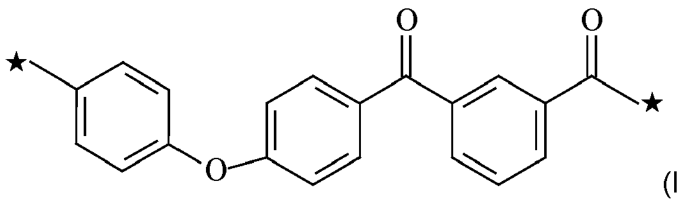

(II) ;

wherein the weight proportion of T units relative to the sum of the T and I units varies from 0% to 100%, preferably from 50% to 90%, and more preferably from 55% to 85%.

7. The coating composition of claim 6, wherein the polyetherketoneketone has a weight proportion of T units relative to the sum of the T and I units which varies from 65% to 75% or from 75% to 85%.

8. The coating composition of any one of the preceding claims, wherein the at least one polyaryletherketone represents 0,01% or more, preferably 0,1% or more, and most preferably 0,5% or more, by weight of the total weight of the at least one resin and the at least one polyaryletherketone.

9. The coating composition of anyone of the preceding claims, wherein the at least one polyaryletherketone represents 10,0% or less, by weight of the total weight of the at least one resin and the at least one polyaryletherketone.

10. The coating composition of anyone of the preceding claims, wherein the coating composition is in flakes, pellets, or powder form, and preferably the at least one polyaryletherketone are particles within the coating composition having a volume median diameter dv50 of 1 μm to 100 μm, as determined by laser diffraction according to the ISO 13320:2009 standard.

11. The coating composition of anyone of the preceding claims, wherein the coating composition is in flakes, pellets, or powder form, and preferably the at least one polyaryletherketone are particles within the coating composition having a volume median diameter dv50 of 8 μm to 30 μm, as determined by laser diffraction according to the ISO 13320:2009 standard.

12. The coating composition of anyone of the preceding claims consisting of :

- the at least one resin;

- the at least one polyaryletherketone;
- optionally at least one crosslinking component;
- optionally at least one catalyst; and
- optionally one or more other additives than the at least one polyaryletherketone.

**13.** Process for coating a substrate with the composition of any one of claims 1 to 12, comprising the following steps:

- applying the coating composition according to the invention on at least part of a surface of a substrate; and
- curing the coating composition.

**14.** Use of at least one polyaryletherketone in a coating composition comprising at least one resin, as an additive to lower gloss of the coating composition,

said at least one resin not being a polyaryletherketone,
said at least one polyaryletherketone being in a proportion from 0,0015% to 15,0% by weight of the total weight of the at least one resin and the at least one polyaryletherketone.

**15.** Use of at least one polyaryletherketone in a coating composition comprising at least one resin, as an additive to improve the impact resistance, and/or the penetration resistance, and/or the flexibility of the coating composition,

said at least one resin not being a polyaryletherketone,
said at least one polyaryletherketone being in a proportion from 0,0015% to 15,0% by weight of the total weight of the at least one resin and the at least one polyaryletherketone.

**16.** Use of at least one polyaryletherketone in a coating composition comprising at least one resin, as an additive to improve the weathering resistance of the coating composition,

said at least one resin not being a polyaryletherketone,
said at least one polyaryletherketone being in a proportion from 0,0015% to 15,0% by weight of the total weight of the at least one resin and the at least one polyaryletherketone.

**Figure 1**

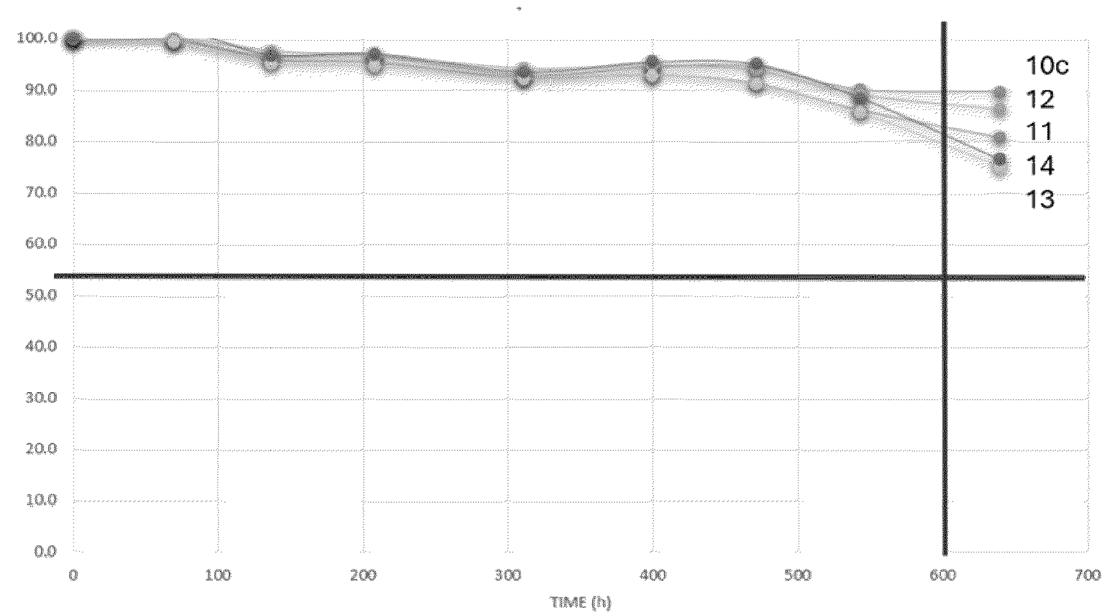
100.0
90.0
80.0
70.0
60.0
50.0
40.0
30.0
20.0
10.0
0.0
0
100
200
300
400
500
600
700
TIME (h)
10c
12
11
14
13

European Patent Office

# EUROPEAN SEARCH REPORT

Application Number
EP 24 30 7220

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 144 622 B1 (STECHER FRIEDHELM [DE] ET AL) 5 December 2006 (2006-12-05) | 1,5,6,8, 9,12,13 | INV. C08G65/40 C08L71/12 |
| A | * examples 1, mixture i) * | 3,14,16 | |
| X | MENG SHI ET AL: "Mechanical Properties and In Vitro Degradation Study of Modified-Polylactic Acid Block Copolymers/Polyetheretherketone Biocomposites", JOURNAL OF APPLIED POLYMER SCIENCE, WILEY SUBSCRIPTION SERVICES, INC., A WILEY COMPANY, NEW YORK, vol. 142, no. 9, 20 November 2024 (2024-11-20), page n/a, XP072815050, ISSN: 0021-8995, DOI: 10.1002/APP.56523 | 1,2, 4-13,15 | |
| A | * page 3 - page 8; figure 7; table 1 * | 3,14,16 | |

TECHNICAL FIELDS SEARCHED (IPC)
C08G
C09J
C08L

The present search report has been drawn up for all claims

| Place of search | Date of completion of the search | Examiner |
|---|---|---|
| The Hague | 19 May 2025 | Adigbli, Francis |

2

CATEGORY OF CITED DOCUMENTS
X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 30 7220

This annex lists the patent family members relating to the patent documents cited in the above-mentioned European search report. The members are as contained in the European Patent Office EDP file on
The European Patent Office is in no way liable for these particulars which are merely given for the purpose of information.

19-05-2025

| Patent document cited in search report | Publication date | Patent family member(s) | Publication date |
|---|---|---|---|
| US 7144622 B1 | 05-12-2006 | DE 19941410 A1 | 08-03-2001 |
| | | EP 1228153 A1 | 07-08-2002 |
| | | EP 1361261 A2 | 12-11-2003 |
| | | US 7144622 B1 | 05-12-2006 |
| | | US 2007112122 A1 | 17-05-2007 |
| | | WO 0116240 A1 | 08-03-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 201831999 B
- WO 12059491 A